# EUROPEAN PATENT SPECIFICATION

(11) **EP 3 054 153 B1**
(45) Date of publication and mention of the grant of the patent: **01.08.2018**
(21) Application number: 16153809.5
(22) Date of filing: 02.02.2016
(51) Int. Cl.: F03D 7/02, F03D 7/04

(54) **WIND POWER GENERATION APPARATUS, AND METHOD OF OPERATING THE SAME**
WINDENERGIEERZEUGUNGSVORRICHTUNG UND VERFAHREN ZUM BETRIEB DAVON
APPAREIL DE GÉNÉRATION D'ÉNERGIE ÉOLIENNE ET SON PROCÉDÉ DE FONCTIONNEMENT

(30) Priority: 06.02.2015 JP 2015021815
(43) Date of publication of application: 10.08.2016
(73) Proprietor: Hitachi, Ltd., Tokyo 100-8280 (JP)
(72) Inventor: KAKUYA, Hiromu, Tokyo, 100-8280 (JP); KOBATA, Norihito, Tokyo, 100-8280 (JP)
(74) Representative: MERH-IP Matias Erny Reichl Hoffmann Patentanwälte PartG mbB

(56) References cited:
- US-A- 6 137 187
- US-A1- 2010 098 541
- HUANG HUAZHANG ET AL: "Adaptive neuro-fuzzy controller for static VAR compensator to damp out wind energy conversion system oscillation", IET GENERATION, TRANSMISSION&DISTRIBUTION, IET, UK, vol. 7, no. 2, 1 February 2013 (2013-02-01), pages 200-207, XP006045572, ISSN: 1751-8687, DOI: 10.1049/IET-GTD.2012.0609

## Description

### BACKGROUND OF THE INVENTION

### 1. Field of the Invention

The present invention relates to a wind power generation apparatus and a method of operating the wind power generation apparatus, and more particularly, to a wind power generation apparatus that adjusts generator torque in a preferred manner, and a method of operating the wind power generation apparatus.

### 2. Description of the Related Art

There are growing concerns these days about global warming caused by carbon dioxide emissions and depletion of fossil fuels, and there is an increasing demand for reductions in carbon dioxide emissions and lower dependence on fossil fuels. In satisfying the demand, it is effective to introduce a power generation system that can generate electric power without emitting carbon dioxide or using fossil fuels, and can use renewable energy obtained from nature such as wind or sunlight.

Among power generation systems using renewable energy, a wind power generation system does not change its output due to solar radiation, unlike a solar power generation system. Therefore, wind power generation systems are drawing attention as relatively safe power generation systems. Also, some wind power generation systems are built on the ocean where wind velocity is high and there is little change in wind velocity, compared with the ground. Such wind power generation systems are also drawing attention as effective power generation systems.

So as to stably supply electric power by using a wind power generation system, it is necessary to employ a technology of reducing vibration generated in the blades, the tower and the drive train, which constitute the wind power generation system.

For example, JP 2007-002773 A discloses a technology designed for reducing vibration generated in the drive train of a wind power generation system. JP 2007-002773 A discloses a "technology by which a fan for cooling a heat generation source such as the power generator in the nacelle is provided, air intake holes are scattered in the circumferential direction of the surface of the tower from a height in the vicinity of the lowest point of the rotor to a predetermined greater height, the air intake holes connect to an exhaust fan via the internal spaces of the tower and the nacelle, and the exhaust fan generates an air intake through the air intake holes".

As the technology disclosed in JP 2007-002773 A is applied, the exhaust fan operates so that the air around the tower is sucked in through the air intake holes. With this, the airflow around the tower is prevented from separating from the tower surface, and smoothly reaches the back surface of the tower. As a result, reductions in the airflow speed and pressure on the back surface of the tower are restrained. Accordingly, it is possible to reduce a tower shadow effect such as a fluctuating load or ultralow frequency noise due to aerodynamic interference between the airflow on the back surface of the tower and the blades. US 2013/0015658 A1 concerns a method and a device for damping torsional oscillations.

### SUMMARY OF THE INVENTION

When a wind power generation system is constructed, vibration of the drive train in the wind power generation system needs to be reduced. The main cause of vibration generated in the drive train is the tower that shields wind. As the tower shields wind, the wind velocity in the vicinity of the tower becomes lower than in other positions. Because of this, the wind energy to be applied to the blades becomes smaller at an azimuth angle at which a blade overlaps the tower when seen from upwind. As a result, the energy with which the blades rotate becomes smaller, or the torque with which the rotor rotates becomes lower.

Meanwhile, the power generator electrically generates generator torque in accordance with the mean rotating speed of the rotor. So as to control the rotor to maintain a constant rotating speed, rotor torque that is mechanically input from the rotor to the power generator needs to be equal to the generator torque. However, the rotor torque decreases at an azimuth angle near the tower, and the rotor torque periodically changes while the rotor rotates 360 degrees. Therefore, a large difference from the generator torque is periodically generated.

In a case where the torque difference matches the resonant frequency in the direction of rotation of the drive train, large vibration might be caused in the drive train. The effect caused by the above described wind shielding by the tower is normally called the tower shadow effect.

The torque difference generated by the tower shadow effect tends to be large in a downwind-type wind power generation system in which the blades are located downwind with respect to the tower. However, the airflow on the back surfaces of the blades is also blocked by the tower in an upwind-type wind power generation system, and the same effect is caused. Therefore, so as to reduce drive train vibration, the adverse influence of the tower shadow effect needs to be reduced in either type.

Where the technology disclosed in JP 2007-002773 A is employed, the wind flow in the vicinity of the tower is improved, and wind shielding wind is reduced. Accordingly, the tower shadow effect can be made smaller. However, additional costs are required for changing the air passage in the tower and the nacelle, and forming the air intake holes in the tower wall surface. Also, when the air intake holes are formed in the tower, the strength of the tower becomes lower. To counter this, more additional costs are required for increasing the strength of the tower by adding a tower wall surface or the like. In view of the above, it is preferable to use a drive train vibration reducing unit that does not require any additional cost.

The present invention aims to provide a wind power generation apparatus according to claim 1 that does not require any additional cost for reducing drive train vibration, and a method of operating the wind power generation apparatus according to claim 13. To achieve the above mentioned object, the present invention provides a wind power generation apparatus that includes: a blade that rotates when receiving wind; a hub that supports the blade and is capable of converting wind energy into rotational energy; a tower that supports the load of the blade; a nacelle that supports a rotor in a rotatable manner with respect to the tower, the rotor supporting the blade and being formed with the blade and the hub; and a power generator capable of converting the rotational energy of the rotor into electric energy. In this wind power generation apparatus, mean rotor torque is the mean value of the rotor torque input to the power generator from the rotor while the rotor rotates 360 degrees. When the absolute value of the mean rotor torque changes by a predetermined amount or more while the rotor rotates 360 degrees, generator torque generated by the power generator is changed.

The present invention also provides a method of operating a wind power generation apparatus including a power generator to be driven when rotor torque is applied to a blade that rotates by receiving wind, the power generator generating electric power with generator torque determined through adjustment of a field amount. By this method, the power generator lowers the generator torque by adjusting the field amount to a weak field as the rotor torque decreases.

The present invention can provide a wind power generation apparatus that does not require any additional cost for reducing drive train vibration, and a method of operating the wind power generation apparatus.

### BRIEF DESCRIPTION OF THE DRAWINGS

Fig. 1 is a diagram showing the processing function of a controller according to the present invention;
Fig. 2 is a block diagram roughly showing a process to be performed by a rotational fluctuation reducing unit mounted in a controller of a wind power generation apparatus according to a first embodiment of the present invention;
Fig. 3 is a diagram showing an example of a means of determining a generator torque correction amount dq_{FF0} in the first embodiment;
Fig. 4 is a schematic diagram showing the relationship among the correction flag, the generator torque correction amount, the generator torque command correction value, and the azimuth angle in the rotational fluctuation reducing unit according to the first embodiment;
Fig. 5 is a flowchart showing the outline of a process to be performed by the rotational fluctuation reducing unit according to the first embodiment;
Fig. 6 is a diagram schematically showing the structure of an entire wind power generation apparatus to which the present invention can be applied;
Fig. 7 is a diagram for explaining an azimuth angle range;
Fig. 8 is a diagram showing the behaviors of a wind power generation apparatus to which the present invention is not applied;
Fig. 9 is a diagram showing the behaviors of a wind power generation apparatus to which the present invention is applied;
Fig. 10 is a block diagram roughly showing a process to be performed by a rotational fluctuation reducing unit mounted in a controller of a wind power generation apparatus according to a second embodiment of the present invention;
Fig. 11 is a diagram showing an example of a means of determining a generator torque correction amount dq_{FF0} in the second embodiment;
Fig. 12 is a flowchart showing the outline of a process to be performed by the rotational fluctuation reducing unit according to the second embodiment;
Fig. 13 is a block diagram roughly showing a process to be performed by a rotational fluctuation reducing unit mounted in a controller of a wind power generation apparatus according to a third embodiment of the present invention;
Fig. 14 is a diagram showing an example of a means of determining a generator torque correction amount dq_{FF0} in the third embodiment;
Fig. 15 is a schematic diagram showing the relationship among the correction flag, the generator torque correction amount, the generator torque command correction value, and the azimuth angle in the rotational fluctuation reducing unit according to the third embodiment;
Fig. 16 is a flowchart showing the outline of a process to be performed by the rotational fluctuation reducing unit according to the third embodiment;
Fig. 17 is a block diagram roughly showing a process to be performed by a rotational fluctuation reducing unit mounted in a controller of a wind power generation apparatus according to a fourth embodiment of the present invention;
Fig. 18 is a diagram showing an example of a means of determining a generator torque correction amount dq_{FF0} in the fourth embodiment;
Fig. 19 is a flowchart showing the outline of a process to be performed by the rotational fluctuation reducing unit according to the fourth embodiment; and
Fig. 20 is a block diagram roughly showing a process to be performed by a rotational fluctuation reducing unit mounted in a controller of a wind power generation apparatus according to a fifth embodiment of the present invention.

### DESCRIPTION OF THE PREFERRED EMBODIMENTS

The following is a detailed description of embodiments of the present invention, with reference to the accompanying drawings. It should be understood that the embodiments described below are merely examples, and the present invention is not limited to those examples described below.

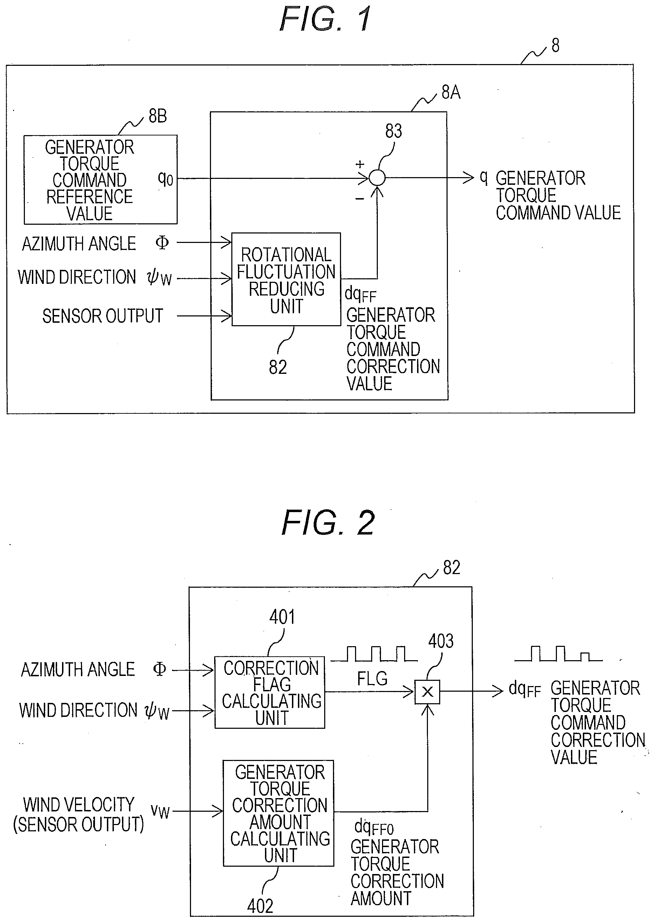

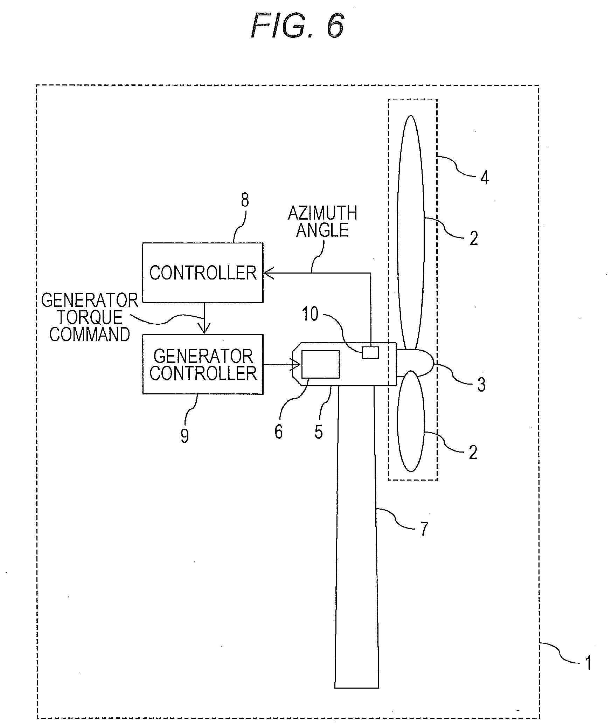

Before the embodiments of the present invention are described, the fundamental structure of a wind power generation apparatus to which the present invention is applied, the background art, and the control to be realized by the present invention are described, with reference to Figs. 6 through 9. A first embodiment will be described after that, with reference to Figs. 1 through 5.

Referring first to Fig. 6, the fundamental structure of an entire wind power generation apparatus to which the present invention can be applied is described.

A wind power generation apparatus 1 shown in Fig. 6 includes a rotor 4 formed with blades 2 and a hub 3 that connects the blades 2. The rotor 4 is connected to a nacelle 5 via a rotating shaft (not shown in Fig. 6), and can change the positions of the blades 2 by rotating. The nacelle 5 supports the rotor 4 in a rotatable manner. The nacelle 5 includes a power generator 6 in an appropriate position. As the blades 2 receive wind, the rotor 4 rotates. As the torque of the rotor 4 causes the power generator 6 to rotate, electric power is generated.

Although not shown in the drawings, each of the blades 2 includes a pitch actuator that can change the positional relationship between the blade 2 and the hub 3, or the blade angle called the pitch angle. As the pitch angle of the blade 2 is changed by the pitch actuator, the rotational energy of the rotor 4 with respect to wind can be changed. With this, the electric power to be generated by the wind power generation apparatus 1 can be controlled, while the rotating speed of the rotor 4 is controlled over a wide wind velocity range.

In the wind power generation apparatus 1 shown in Fig. 6, the nacelle 5 is placed on the tower 7, and is supported in such a manner as to be capable of rotating about the tower 7. The loads of the blades 2 are supported by the tower 7 via the hub 3 and the nacelle 5. The tower 7 is mounted on a base (not shown in the drawings), and is located in a predetermined position on the ground, the seabed, or the like.

The wind power generation apparatus 1 also includes a controller 8, and determines a generator torque command value to be issued to the power generator based on an azimuth angle that is determined based on an output signal from an azimuth angle detecting sensor 10 and indicates the position of the rotor 4 relative to the nacelle 5. Further, a rotational fluctuation reducing unit 82 that can reduce drive train vibration generated due to a tower shadow effect is mounted in the form of a program in the controller 8.

The wind power generation apparatus 1 further includes a generator controller 9. The generator torque command value determined in the controller 8 is sent to the generator controller 9, and the generator controller 9 adjusts the power generator 6. In this manner, the electric power to be output from the wind power generation apparatus 1 is adjusted.

Although not clearly shown in the drawings, like the azimuth angle detecting sensor 10, a wind velocity sensor that measures wind velocity in the vicinity of the nacelle 5, a generator rotating speed sensor that measures the rotating speed of the power generator, a wind direction sensor that measures wind directions, a power sensor that measures effective electric power generated by the power generator, and the like are provided in appropriate positions.

In Fig. 6, the controller 8 and the generator controller 9 are provided outside the nacelle 5 or the tower 7, but are not necessarily arranged in this manner. For example, the controller 8 and the generator controller 9 may be placed in predetermined positions inside or outside the nacelle 5 or the tower 7, or may be placed outside the wind power generation apparatus 1.

Here, the tower shadow effect means the phenomenon in which the wind velocity to be input to the blades 2 becomes rapidly lower than the wind velocity in the surrounding areas due to the influence of the tower 7. The influence of the tower 7 becomes largest in a position where the wind direction is the same with respect to the tower 7 and the blades 2. However, the azimuth angle at which the wind velocity rapidly drops due to the influence of the tower 7 is not necessarily restricted to such a position. A downwind-type wind power generation apparatus in which the blades 2 rotate downwind with respect to the tower 7 is easily affected by the tower shadow. Therefore, it is preferable to apply the present invention to such a wind power generation apparatus. Even an upwind-type wind power generation apparatus in which the blades rotate upwind with respect to the tower is affected by the tower shadow. Accordingly, the effects of application of the present invention can also be expected in such a wind power generation apparatus. In the embodiments described below, examples of downwind cases will be described.

In Fig. 6 showing the fundamental structure of an entire wind power generation apparatus, the controller 8 determines a generator torque command value q. The generator torque command value q is obtained by performing various kinds of correction on a generator torque command reference value q₀ so that the rotating speed of the rotor 4 and the generator torque of the power generator 6 can be adjusted in accordance with wind velocity. According to the present invention, the correction of the generator torque command reference value q₀ is appropriately designed to obtain the generator torque command value q, but this aspect will be described later with reference to Fig. 1.

The generator torque command value q determined in this manner may be considered a constant value in a short period of time. The generator torque command value q created by the controller 8 is supplied to the generator controller 9, to eventually determine the field amount of the power generator 6.

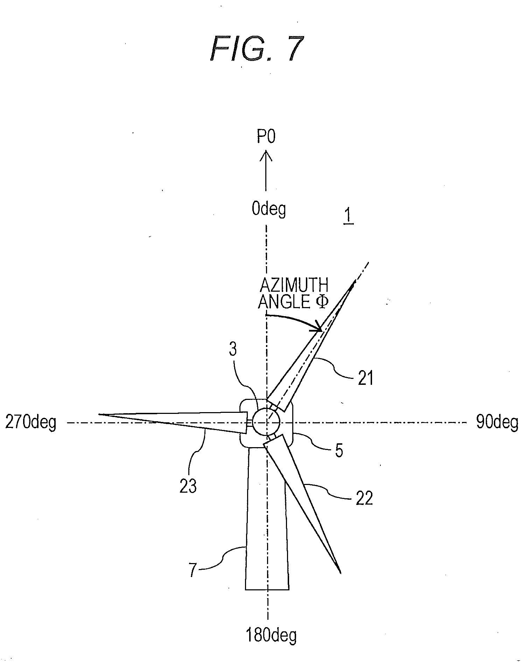

The present invention is to correct vibration caused by mismatch between the generator torque and the rotor torque, and, as described above, the generator torque is a constant value in a short period of time. On the other hand, the rotor torque periodically decreases. In the description below, the periodic decreasing of the rotor torque is described with reference to Fig. 7.

Fig. 7 is a schematic diagram for explaining an azimuth angle Φ. The azimuth angle Φ is determined based on an appropriate position of a blade 2 (21, 22, or 23), with the positive direction being the direction of clockwise rotation of the rotor 4 when the wind power generation apparatus 1 is seen from the upwind direction. In Fig. 7, the azimuth angle Φ has a reference position P0 that is the rotational position of the rotor 4 in which the blade 2 is located in the highest position. The azimuth angle Φ changes in the range of 0 degrees to 360 degrees in the clockwise direction in Fig. 7.

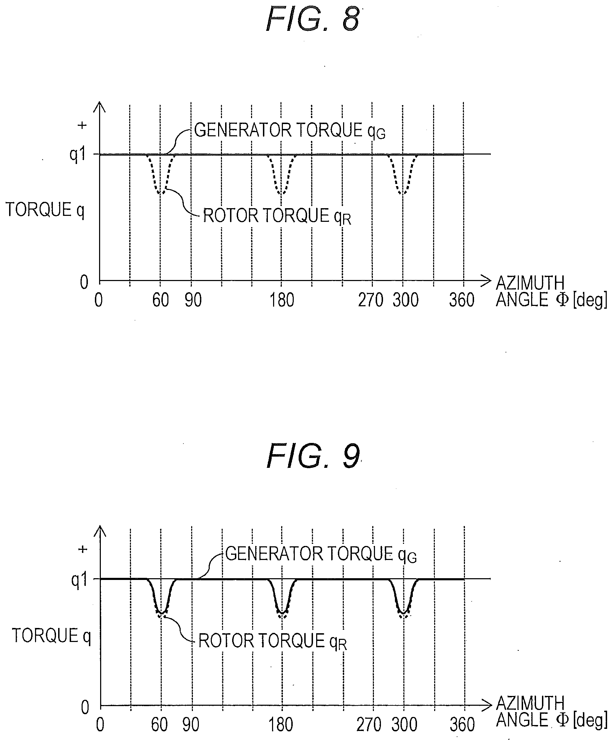

Fig. 8 is a diagram showing the behaviors of a wind power generation apparatus 1 to which the present invention is not applied. In Fig. 8, the abscissa axis indicates the azimuth angle Φ, the ordinate axis indicates the torque q to be applied to the power generator 6, and the upward direction in the drawing is the positive direction of the torque. In Fig. 8, the solid line indicates a generator torque q_{G} that is the torque generated by the power generator 6, and the dashed line indicates the rotor torque q_{R} that is the torque the rotor 4 applies to the power generator 6. Fig. 8 shows behaviors in a short period of time in an example case where the generator rotating speed and the generator torque q_{G} are constant, as the wind power generation apparatus 1 is performing a rated output operation, for example.

In the case where the present invention is not applied, the generator torque q_{G} is controlled to be constant so that the electric power to be generated from the wind power generation apparatus 1 is maintained constant. On the other hand, the rotor torque q_{R} indicated by the dashed line decreases due to the tower shadow effect at the azimuth angles at which a blade 2 overlaps the tower 7, or more specifically, in the vicinities of 60 degrees, 180 degrees, and 300 degrees.

As shown in Fig. 8, as a difference is generated between the generator torque q_{G} and the rotor torque q_{R}, the rotating direction of the rotator (shaft) that connects the rotor 4 and the power generator 6 is twisted, and the rotating speed of the rotor 4 or the power generator 6 fluctuates. If the frequency of this fluctuation is equal to the resonant frequency of the drive train, resonance is generated in the drive train, and large vibration is caused in the entire wind power generation apparatus 1.

In short, the rotor torque q_{R} periodically becomes lower than the constant generator torque qc, and vibration is caused by the difference. On the assumption that the periodic decreasing of the rotor torque q_{R} cannot be prevented, the present invention is to eliminate the cause of vibration by causing the generator torque q_{G} to fluctuate with the rotor torque q_{R} so as not to generate any difference.

Fig. 9 is a diagram showing the behaviors of a wind power generation apparatus 1 to which the present invention is applied. According to the present invention, the generator torque q_{G} is changed with fluctuation of the rotor torque q_{R}, so that any difference is not generated between the rotor torque q_{R} and the generator torque q_{G}.

In the description below, a control method of the present invention that enables the torque changing process illustrated in Fig. 9 is described. Fig. 1 is a diagram showing the processing function of the controller 8 according to the present invention.

The processing function of the controller 8 in Fig. 1 includes: a variable speed control unit 8B that determines the generator torque command reference value q₀ so that the rotating speed of the rotor 4 and the generator torque of the power generator 6 can be adjusted in accordance with wind velocity; the rotational fluctuation reducing unit 82 that generates a generator torque command correction value dq_{FF} for reducing drive train vibration generated due to the tower shadow effect; and a subtracting unit 83 that determines a generator torque command q by subtracting the generator torque command correction value dq_{FF} from the generator torque command reference value q₀. The rotational fluctuation reducing unit 82 and the subtracting unit 83 might be collectively referred to as a generator torque control unit 8A.

With the above described structure in the controller 8, the correction value dq_{FF} determined by the rotational fluctuation reducing unit 82 is added to the generator torque command reference value q₀ determined by the variable speed control unit 8B so that the rotating speed of the rotor 4 and the generator torque of the power generator 6 can be adjusted in accordance with wind velocity. In this manner, the generator torque command value q to be sent to the power generator 6 is adjusted. The generator torque command reference value q₀ is determined by the variable speed control unit 8B that controls the power generator and the pitch angle in accordance with the generator rotating speed.

The rotational fluctuation reducing unit 82 determines the generator torque command correction value dq_{FF} based on an azimuth angle Φ, a wind direction Ψ_{w}, and a sensor output. The sensor output is an output of the wind velocity sensor that measures wind velocity, the rotating speed sensor that determines a generator rotating speed, or the like. The contents of the sensor output will be described later in detail in the explanation of the respective embodiments.

The rotational fluctuation reducing unit 82 determines an azimuth angle Φ_{TS} at which the tower shadow effect becomes greater based on the wind direction Ψ_{W}, and outputs the generator torque command correction value dq_{FF} when the azimuth angle Φ of the rotor 4 becomes equal to the azimuth angle Φ_{TS} at which the tower shadow effect becomes greater. The subtracting unit 83 then subtracts the generator torque command correction value dq_{FF} from the generator torque command reference value q₀, to determine the generator torque command value q. The above azimuth angle Φ_{TS} may be determined through proportional control, or may be determined based on characteristics that are specified in a table or the like in advance.

The rotational fluctuation reducing unit 82 in the embodiments described below is designed to issue a command value (the generator torque command value q) for the generator torque q_{G} that periodically fluctuates. This aspect is now described in greater detail, with reference to Fig. 9.

In Fig. 9, the abscissa axis indicates the azimuth angle Φ, and the ordinate axis indicates the torque to be applied to the power generator (the upward direction in the drawing is the positive direction of the torque), as in Fig. 8. In Fig. 9, the solid line indicates a generator torque q_{G} that is the torque generated by the power generator 6, and the dashed line indicates the rotor torque q_{R} that is the torque the rotor 4 inputs to the power generator 6. Like Fig. 8, Fig. 9 shows an example case where the generator rotating speed and the generator torque q_{G} are constant, as the wind power generation apparatus 1 is performing a rated output operation, for example.

In a case where the rotational fluctuation reducing unit 82 according to the present invention is used, the generator torque q_{G} at an azimuth angle Φ at which the tower shadow effect has influence is controlled to become lower than the generator torque q_{G} maintained constant so as to maintain constant power generation from the wind power generation apparatus 1. Specifically, the generator torque q_{G} is reduced in the vicinities of the azimuth angles Φ (60 degrees, 180 degrees, and 300 degrees) at which a blade 2 overlaps the tower 7.

The generator torque q_{G} indicated by the solid line is reduced based on azimuth angles Φ. With this, the difference from the rotor torque q_{R} indicated by the dashed line becomes smaller in the wind power generation apparatus 1. As described above, the difference between the generator torque q_{G} and the rotor torque q_{R} is the main cause of fluctuation of the generator rotating speed. Therefore, the use of the rotational fluctuation reducing unit 82 according to the present invention can reduce vibration of the drive train.

In the description below, embodiments for embodying the above described concept of the present invention will be described in detail.

### First Embodiment

Referring to Figs. 2 through 5, an example operation of the rotational fluctuation reducing unit 82 according to a first embodiment of the present invention is described.

Fig. 2 is a block diagram roughly showing a process to be performed by the rotational fluctuation reducing unit 82 mounted in the controller 8 of a wind power generation apparatus 1 according to the first embodiment of the present invention. The rotational fluctuation reducing unit 82 of the first embodiment includes a correction flag calculating unit 401, a generator torque correction amount calculating unit 402, and a multiplying unit 403. In the first embodiment, the sensor output shown in Fig. 1 is an output of the wind velocity sensor.

The correction flag calculating unit 401 determines a correction flag FLG based on azimuth angles Φ and a wind direction Ψ_{W}. When the wind direction Ψ_{W} is equal to the orientation of the nacelle 5, the tower shadow effect becomes largest at the azimuth angles Φ of 60 degrees, 180 degrees, and 300 degrees. Therefore, the correction flag FLG is determined so that the torque fluctuation to be caused at the above three azimuth angles Φ can be reduced.

This correction flag FLG is a signal indicating timing. The correction flag FLG is a periodic timing signal that is normally "0", but outputs "1" when the azimuth angle Φ is 60 degrees, 180 degrees, or 300 degrees. When the wind direction Ψ_{W} differs from the orientation of the nacelle 5, on the other hand, the azimuth angles Φ at which the tower shadow effect becomes greater differ from the above three angles, and the correction flag FLG as a periodic timing signal is adjusted accordingly.

The generator torque correction amount calculating unit 402 determines a generator torque correction amount dq_{FF0} based on wind velocity V_{W}. The generator torque correction amount calculating unit 402 may determine the generator torque correction amount dq_{FF0} through proportional control on the wind velocity v_{w}, or determine the generator torque correction amount dq_{FF0} in accordance with characteristics that are specified in a table or the like in advance.

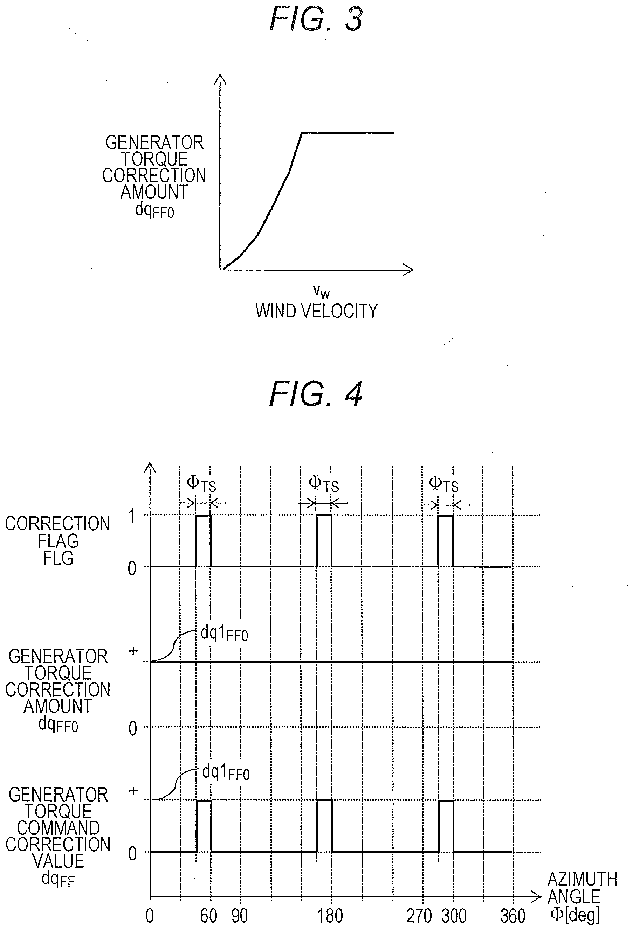

Fig. 3 shows an example of the means of determining the generator torque correction amount dq_{FF0}. This example involves a function generator that outputs signals in accordance with wind velocity. The function generator may characteristically have a region where the generator torque correction amount dq_{FF0} changes or a region where the generator torque correction amount dq_{FF0} remains constant based on the wind velocity v_{w}.

Referring back to Fig. 2, the multiplying unit 403 assigns the product of the correction flag FLG and the generator torque correction amount dq_{FF0} to the generator torque command correction value dq_{FF}, and relays the generator torque command correction value dq_{FF} to the next process. Accordingly, the generator torque command correction value dq_{FF} is a signal that contains timing information and size information. That is, the generator torque command correction value dq_{FF} is not a simple periodic pulse stream with a constant peak value, but a pulse stream with peak values varying with wind velocity in the respective pulses. It should be noted that the rotational fluctuation reducing unit 82 according to the first embodiment employs a control unit to determine the generator torque correction amount dq_{FF0} in a feedforward manner based on the wind velocity v_{w}.

Fig. 4 is a schematic diagram showing the outline of a process to be performed by the rotational fluctuation reducing unit 82 according to the first embodiment. The abscissa axis indicates the azimuth angle Φ, and the ordinate axis indicates, from the top, the correction flag FLG, the generator torque correction amount dq_{FF0}, and the generator torque command correction value dq_{FF}. In the outline of the process shown in Fig. 4, the wind direction Ψ_{W} is equal to the orientation of the nacelle 5.

So as to adjust the generator torque in the vicinities of the azimuth angles Φ of 60 degrees, 180 degrees, and 300 degrees, the correction flag FLG is set to "1" during a period Φ_{TS} before each of the three azimuth angles Φ, and is set to "0" during the other periods. This is because generator torque adjustment is started earlier than each of the above three azimuth angles Φ, and the adjustment amount is gradually reduced after reaching the peak at each of the three azimuth angles Φ. In this manner, feedforward-type correction is performed approximately 10 degrees earlier than each of the azimuth angles Φ of 60 degrees, 180 degrees, and 300 degrees.

A value dq1_{FF0} is then assigned to the generator torque correction amount dq_{FF0} based on the wind velocity v_{w} in accordance with the relationship shown in Fig. 3, for example. The product of the correction flag FLG and the generator torque correction amount dq_{FF0} is then assigned to the generator torque command correction value dq_{FF}. In the example shown in Fig. 4, the value dq1_{FF0} is assigned to the generator torque command correction value dq_{FF} during the period Φ_{TS} before each of the azimuth angles Φ of 60 degrees, 180 degrees, and 300 degrees, and "0" is assigned to the generator torque command correction value dq_{FF} so as not to perform torque correction at any other azimuth angles Φ.

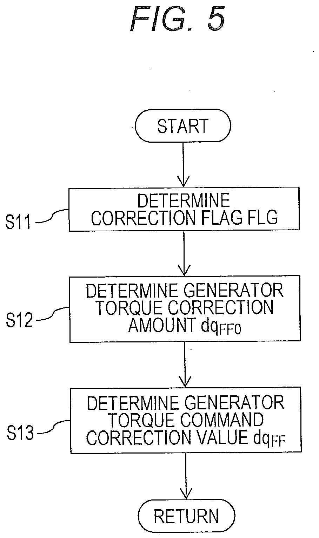

Fig. 5 is a flowchart showing the outline of the process to be performed by the rotational fluctuation reducing unit 82 according to the first embodiment. In the first step S11, the correction flag FLG is determined based on an azimuth angle Φ and a wind direction Ψ_{W}, and the process moves on to the next step S12. In step S12, the generator torque correction amount dq_{FF0} is determined based on the wind velocity v_{w}, and the process moves on to the next step S13. In step S13, the generator torque command correction value dq_{FF} is determined based on the correction flag FLG and the generator torque correction amount dq_{FF0}, and the process comes to an end.

As the above described rotational fluctuation reducing unit 82 according to the first embodiment is used, the difference between the rotor torque and the generator torque can be reduced at azimuth angles at which the tower shadow effect is greater. Accordingly, vibration generated in the drive train due to the tower shadow effect can be reduced.

The rotational fluctuation reducing unit 82 according to the first embodiment is designed to adjust the generator torque in a feedforward manner. Since control is performed so that the operation to reduce torque differences generated due to the tower shadow effect is reflected beforehand, vibration of the drive train can be fundamentally reduced in a highly-responsive manner.

### Second Embodiment

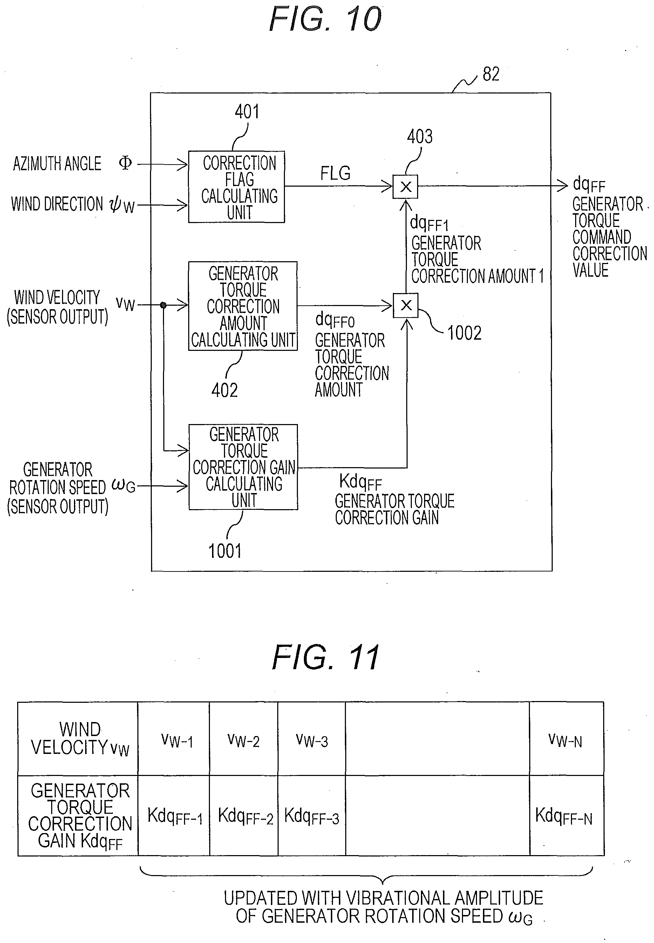

Referring now to Figs. 10 through 12, a rotational fluctuation reducing unit 82 according to a second embodiment is described. The rotational fluctuation reducing unit 82 according to the second embodiment shown in Fig. 10 is basically the same as the rotational fluctuation reducing unit 82 shown in Fig. 2, but differs from the first embodiment shown in Fig. 2 in that the sensor output is an output of the wind velocity sensor that measures wind velocity v_{w}, and an output of the rotating speed sensor that measures a generator rotating speed ω_{G}.

In the block diagram in Fig. 10, the rotational fluctuation reducing unit 82 includes a correction flag calculating unit 401, a generator torque correction amount calculating unit 402, a generator torque correction gain calculating unit 1001, a multiplying unit 1002, and a multiplying unit 403. In Fig. 10, the correction flag calculating unit 401, the generator torque correction amount calculating unit 402, and the multiplying unit 403 are the same as those of the above described first embodiment shown in Fig. 2, and therefore, explanation of them is not repeated herein.

The generator torque correction gain calculating unit 1001 newly introduced in this embodiment determines a generator torque correction gain Kdq_{FF} based on the wind velocity v_{w} and the generator rotating speed ω_{G}. This generator torque correction gain Kdq_{FF} is a value for feeding back the wind velocity v_{w} and the generator rotating speed ω_{G}, and adjusting the generator torque correction amount dq_{FF0}. The multiplying unit 1002 multiplies the generator torque correction amount dq_{FF0} by the generator torque correction gain Kdq_{FF}, and assigns the result to a generator torque correction amount 1 dq_{FF1}. After that, the multiplying unit 403 multiplies the generator torque correction amount 1 dq_{FF1} by the correction flag FLG, and assigns the result to the generator torque command correction value dq_{FF}.

Fig. 11 is a diagram showing an example of a process to be performed by the generator torque correction gain calculating unit 1001. The generator torque correction gain calculating unit 1001 is a table containing the generator torque correction gain Kdq_{FF} to be referred to with the wind velocity v_{w}, and each gain is updated with the vibrational amplitude of the generator rotating speed ω_{G}. The N sets of values are independent values, but the intermediate value thereof may be linearly interpolated in accordance with the wind velocity v_{w}, or may be interpolated according to an approximate expression. The vibrational amplitude of the generator rotating speed ω_{G} may be updated in proportion to the amplitude of a certain frequency component as a result of Fourier transform of the generator rotating speed ω_{G}.

The rotational fluctuation reducing unit 82 according to the second embodiment is the same as the rotational fluctuation reducing unit 82 according to the first embodiment, except for further having the function to feed back the wind velocity v_{w} and the generator rotating speed ω_{G}. Where the rotational fluctuation reducing unit according to the first embodiment is used, drive train vibration due to the tower shadow effect can be reduced, but it is not possible to cope with temporal changes in the torque difference in some cases.

In the second embodiment, the generator torque correction amount dq_{FF0} can be adjusted in accordance with changes in the amplitude component of the generator rotating speed ω_{G} and the wind velocity v_{w}. Accordingly, even in a case where the initial generator torque correction amount dq_{FF0} is not an appropriate value for making the rotor torque and the generator torque equal to each other, or where the initial generator torque correction amount dq_{FF0} has changed with time, drive train vibration can be appropriately reduced.

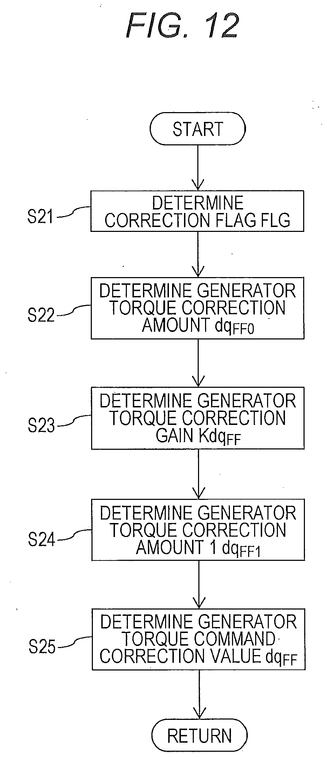

Fig. 12 is a flowchart showing the outline of the process to be performed by the rotational fluctuation reducing unit 82 according to the second embodiment. In the first step S21, the correction flag FLG is determined based on an azimuth angle Φ and a wind direction Ψ_{W}, and the process moves on to the next step S22. In step S22, the generator torque correction amount dq_{FF0} is determined based on the wind velocity v_{w}, and the process moves on to the next step S23. In step S23, the generator torque correction gain Kdq_{FF} is determined based on the wind velocity v_{w} and the generator rotating speed ω_{G}, and the process moves on to the next step S24. In step S24, the generator torque correction amount 1 dq_{FF1} is determined based on the generator torque correction gain Kdq_{FF} and the generator torque correction amount dq_{FF0}, and the process moves on to the next step S25. In step S25, the generator torque command correction value dq_{FF} is determined based on the correction flag FLG and the generator torque correction amount 1 dq_{FF1}, and the process comes to an end.

### Third Embodiment

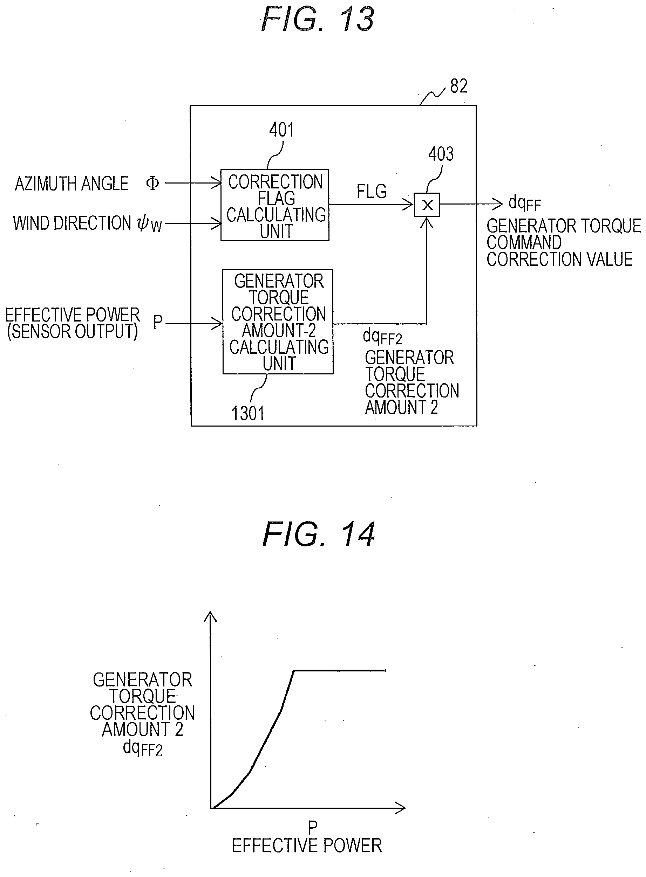

Referring now to Figs. 13 through 16, an example operation of a rotational fluctuation reducing unit 82 according to a third embodiment is described.

The rotational fluctuation reducing unit 82 shown in Fig. 13 includes a correction flag calculating unit 401, a generator torque correction amount-2 calculating unit 1301, and a multiplying unit 403. In the third embodiment, the sensor output in Fig. 1 is an output of the power sensor that measures effective electric power that is output from the power generator 6. The correction flag calculating unit 401 and the multiplying unit 403 perform the same processes as those in the first and second embodiments, and therefore, explanation of them is not repeated herein.

In Fig. 13, the generator torque correction amount-2 calculating unit 1301 determines a generator torque correction amount 2 dq_{FF2} based on effective electric power P that is output from the power generator 6. The generator torque correction amount-2 calculating unit 1301 may determine the generator torque correction amount 2 dq_{FF2} through proportional control on the effective electric power P, or determine the generator torque correction amount 2 dq_{FF2} in accordance with characteristics that are specified in a table or the like in advance.

Fig. 14 shows an example where a function generator is used as an example of the means of determining the generator torque correction amount 2 dq_{FF2}. The function generator may have a region where the generator torque correction amount 2 dq_{FF2} changes or a region where the generator torque correction amount 2 dq_{FF2} remains constant based on the effective electric power P.

The multiplying unit 403 assigns the product of the correction flag FLG and the generator torque correction amount 2 dq_{FF2} to the generator torque command correction value dq_{FF}, and relays the generator torque command correction value dq_{FF} to the next process.

It should be noted that the rotational fluctuation reducing unit 82 shown in Fig. 13 employs a control unit to determine the generator torque correction amount 2 dq_{FF2} in a feedforward manner based on the effective electric power P.

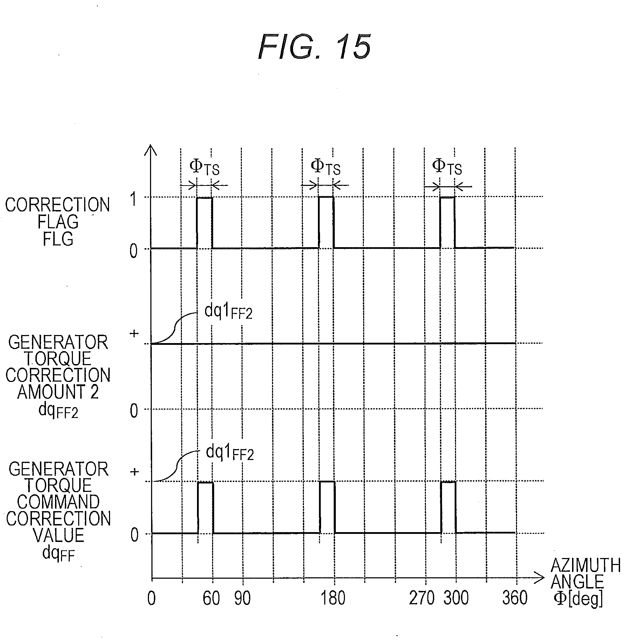

Fig. 15 is a schematic diagram showing the outline of a process to be performed by the rotational fluctuation reducing unit 82 according to the third embodiment. The abscissa axis indicates the azimuth angle Φ, and the ordinate axis indicates, from the top, the correction flag FLG, the generator torque correction amount 2 dq_{FF2}, and the generator torque command correction value dq_{FF}. In the outline of the process shown in Fig. 15, the wind direction Ψ_{W} is equal to the orientation of the nacelle 5.

So as to adjust the generator torque in the vicinities of the azimuth angles Φ of 60 degrees, 180 degrees, and 300 degrees, the correction flag FLG is set to "1" during a period Φ_{TS} before each of the three azimuth angles Φ, and is set to "0" during the other periods. This is because generator torque adjustment is started earlier than each of the above three azimuth angles Φ, and the adjustment amount is gradually reduced after reaching the peak at each of the three azimuth angles Φ.

A value dq1_{FF2} is assigned to the generator torque correction amount 2 dq_{FF2} based on the effective electric power P in accordance with the relationship shown in Fig. 14, for example. The product of the correction flag FLG and the generator torque correction amount 2 dq_{FF2} is then assigned to the generator torque command correction value dq_{FF}.

In the example shown in Fig. 15, the value dq1_{FF2} is assigned to the generator torque command correction value dq_{FF} during the period Φ_{TS} before each of the azimuth angles Φ of 60 degrees, 180 degrees, and 300 degrees, and "0" is assigned to the generator torque command correction value dq_{FF} so as not to perform torque correction at any other azimuth angles Φ.

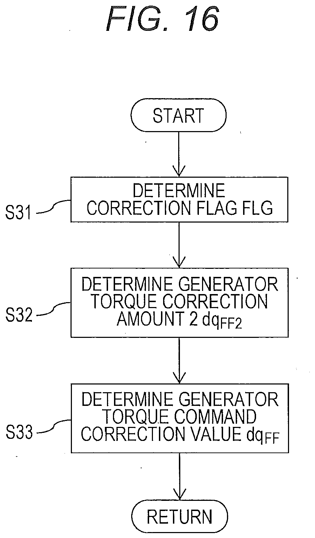

Fig. 16 is a flowchart showing the outline of the process to be performed by the rotational fluctuation reducing unit 82 according to the third embodiment. In step S31, the correction flag FLG is determined based on an azimuth angle Φ and a wind direction Y_{W}, and the process moves on to the next step. In step S32, the generator torque correction amount 2 dq_{FF2} is determined based on the effective electric power P, and the process moves on to the next step. In step S33, the generator torque command correction value dq_{FF} is determined based on the correction flag FLG and the generator torque correction amount 2 dq_{FF2}, and the process comes to an end.

As the above described rotational fluctuation reducing unit 82 according to the third embodiment is used, the difference between the rotor torque and the generator torque can be reduced at azimuth angles at which the tower shadow effect is greater. Accordingly, vibration generated in the drive train due to the tower shadow effect can be reduced.

The rotational fluctuation reducing unit 82 according to the third embodiment is designed to adjust the generator torque in a feedforward manner. Since control is performed so that the operation to reduce torque differences generated due to the tower shadow effect is reflected beforehand, vibration of the drive train can be fundamentally reduced in a highly-responsive manner.

### Fourth Embodiment

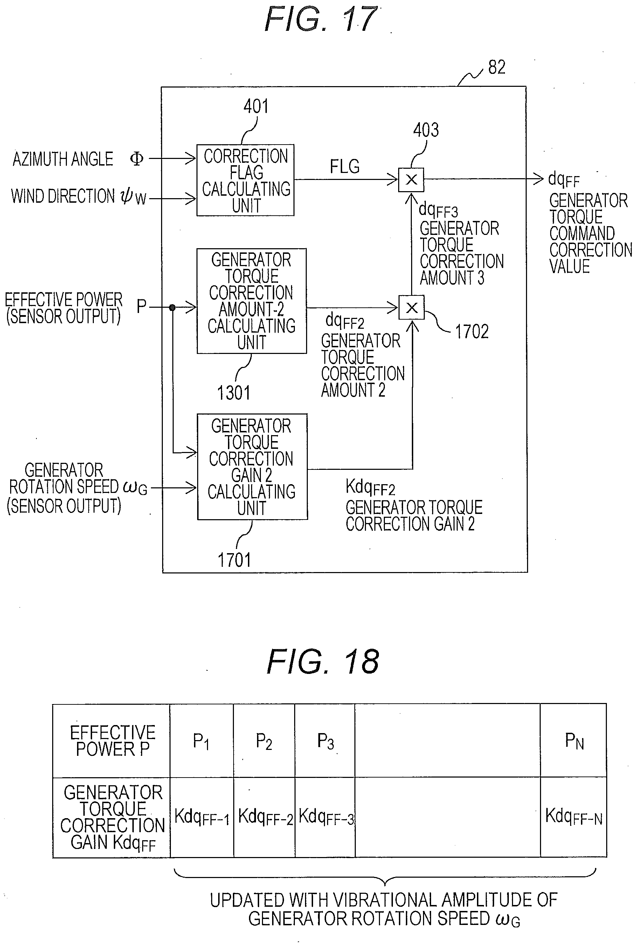

Referring now to Figs. 17 through 19, a rotational fluctuation reducing unit 82 according to a fourth embodiment is described. The rotational fluctuation reducing unit 82 according to the fourth embodiment is basically the same as the rotational fluctuation reducing unit 82 shown in Fig. 2, but differs from the other embodiments in that the sensor output is the effective electric power P and the generator rotating speed ω_{G}.

The rotational fluctuation reducing unit 82 shown in Fig. 17 includes a correction flag calculating unit 401, a generator torque correction amount-2 calculating unit 1301, a generator torque correction gain-2 calculating unit 1701, a multiplying unit 1702, and a multiplying unit 403. In Fig. 17, the correction flag calculating unit 401, the generator torque correction amount-2 calculating unit 1301, and the multiplying unit 403 are the same as those of the above described embodiments, and therefore, explanation of them is not repeated herein.

The generator torque correction gain-2 calculating unit 1701 newly introduced in this embodiment determines a generator torque correction gain 2 Kdq_{FF2} based on the effective electric power P and the generator rotating speed ω_{G}. This generator torque correction gain 2 Kdq_{FF2} is a value for feeding back the effective electric power P and the generator rotating speed ω_{G}, and adjusting the generator torque correction amount 2 dq_{FF2}. The multiplying unit 1702 multiplies the generator torque correction amount 2 dq_{FF2} by the generator torque correction gain 2 Kdq_{FF2}, and assigns the result to a generator torque correction amount 3 dq_{FF3}. After that, the multiplying unit 403 multiplies the generator torque correction amount 3 dq_{FF3} by the correction flag FLG, and assigns the result to the generator torque command correction value dq_{FF}.

Fig. 18 is a diagram showing an example of a process to be performed by the generator torque correction gain-2 calculating unit 1701. In this example, the generator torque correction gain-2 calculating unit 1701 is realized by a table containing the generator torque correction gain 2 Kdq_{FF2} with respect to the effective electric power P. Each gain is updated with the vibrational amplitude of the generator rotating speed ω_{G}. The N sets of values are independent values, but the intermediate value thereof may be linearly interpolated in accordance with the effective electric power P, or may be interpolated according to an approximate expression. The vibrational amplitude of the generator rotating speed ω_{G} may be updated with a value that is proportional to the amplitude of a certain frequency component as a result of Fourier transform of the generator rotating speed ω_{G}.

The rotational fluctuation reducing unit 82 according to the fourth embodiment is the same as the rotational fluctuation reducing unit 82 according to the third embodiment, except for further having the function to feed back the effective electric power P and the generator rotating speed ω_{G}. Where the rotational fluctuation reducing unit according to the third embodiment is used, drive train vibration due to the tower shadow effect can be reduced, but it is not possible to cope with temporal changes in the torque difference in some cases.

In the fourth embodiment, the generator torque correction amount 2 dq_{FF2} can be adjusted in accordance with changes in the amplitude component of the generator rotating speed ω_{G} and the effective electric power P. Accordingly, even in a case where the initial generator torque correction amount 2 dq_{FF2} is not an appropriate value for making the rotor torque and the generator torque equal to each other, or where the initial generator torque correction amount 2 dq_{FF2} has changed with time, drive train vibration can be appropriately reduced.

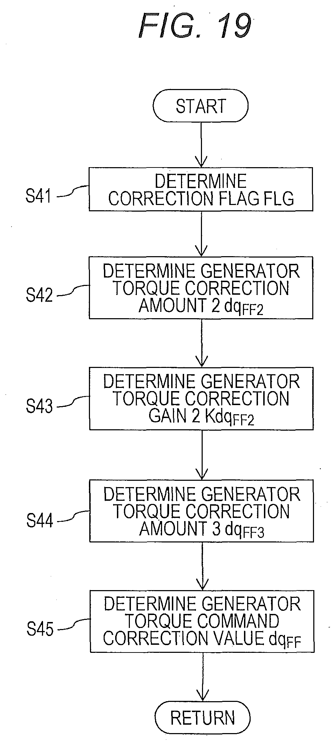

Fig. 19 is a flowchart showing the outline of the process to be performed by the rotational fluctuation reducing unit 82 according to the fourth embodiment. In step S41, the correction flag FLG is determined based on an azimuth angle Φ and a wind direction Ψ_{W}, and the process moves on to the next step. In step S42, the generator torque correction amount 2 dq_{FF2} is determined based on the effective electric power P, and the process moves on to the next step. In step S43, the generator torque correction gain 2 Kdq_{FF2} is determined based on the effective electric power P and the generator rotating speed ω_{G}, and the process moves on to the next step. In step S44, the generator torque correction amount 3 dq_{FF3} is determined based on the generator torque correction gain 2 Kdq_{FF2} and the generator torque correction amount 2 dq_{FF2}, and the process moves on to the next step. In step S45, the generator torque command correction value dq_{FF} is determined based on the correction flag FLG and the generator torque correction amount 3 dq_{FF3}, and the process comes to an end.

### Fifth Embodiment

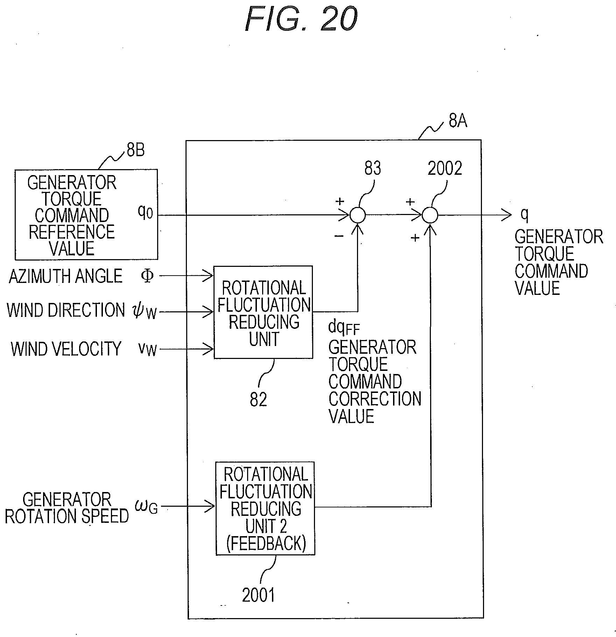

Referring now to Fig. 20, a modification of the generator torque control unit is described as a fifth embodiment.

The generator torque control unit of the fifth embodiment shown in Fig. 20 is the same as the generator torque control unit shown in Fig. 1 on which the first through fourth embodiments are based, except for further including a rotational fluctuation reducing unit 2 (2001).

The rotational fluctuation reducing unit 2 (2001) determines a value for correcting and adjusting the generator torque command value q based on the generator rotating speed ω_{G}. This rotational fluctuation reducing unit 2 (2001) uses a measured value of the generator rotating speed as a result of generation of generator torque, and is a feedback-type generator torque correcting unit. Such a feedback-type generator torque correcting unit is generally used so as to reduce drive train vibration as in the other embodiments, and is called a drive train damper control unit.

The rotational fluctuation reducing unit 82 of each of the first through fourth embodiments described above may be used in conjunction with the drive train damper control unit. The feedforward function described in the first through fourth embodiments can reduce vibration in a highly-responsive manner, and the above drive train damper control unit has a feedback control function to cope with vibration actually generated. Accordingly, robustness can be secured in reducing vibration.

The rotational fluctuation reducing unit 82 of the fifth embodiment is the same as those of the first through fourth embodiments, and therefore, explanation thereof is not repeated therein.

The present invention is not limited to the above described embodiments, and a wind power generation apparatus to which the present invention is applied may be a bottom-mounted wind power generation apparatus having its tower placed on the ground or the seabed, or may be a floating-type wind power generation apparatus mounted on a base floating on the sea.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. A wind power generation apparatus (1) comprising:
a blade (2) configured to rotate when receiving wind;
a hub (3) configured to support the blade (2), the hub (3) being capable of converting wind energy into rotational energy;
a tower (7) configured to support a load of the blade (2);
a nacelle (5) configured to support a rotor (4) in a rotatable manner with respect to the tower (7), the rotor (4) supporting the blade (2) and being formed with the blade (2) and the hub (3);
a power generator capable of converting rotational energy of the rotor (4) into electric energy, and
a wind direction sensor that measures a wind direction,
wherein rotor torque is input to the power generator from the rotor (4),
when the rotor torque changes by a predetermined value or greater, generator torque generated by the power generator is changed, the change in the rotor torque occurring a plurality of times while the rotor (4) rotates 360 degrees, **characterized in that**
the generator torque at an azimuth angle (Φ) at which the tower shadow effect becomes greater based on the wind direction is controlled to become lower than the generator torque maintained constant so as to maintain constant power generation, and
an amount of adjustment of the generator torque is determined in a feedforward manner.

2. The wind power generation apparatus (1) according to claim 1, wherein
an azimuth angle indicates a rotational position of the rotor (4) relative to the nacelle (5), and
the generator torque is reduced at the azimuth angle at which the rotor torque decreases when the blade (2) located downwind with respect to the tower (7) is affected by a tower shadow.

3. The wind power generation apparatus (1) according to claim 2, wherein the generator torque is adjusted to make the rotor torque and the generator torque equal to each other at the azimuth angle at which the rotor torque decreases.

4. The wind power generation apparatus (1) according to claim 2, wherein an amount of adjustment of the generator torque is determined in a feedforward manner based on one of a wind velocity and effective electric power output from the power generator.

5. The wind power generation apparatus (1) according to claim 4, wherein the amount of adjustment of the generator torque is appropriately updated by feeding back one of a rotating speed of the rotor (4) and a rotating speed of the power generator.

6. The wind power generation apparatus (1) according to claim 4, wherein the amount of adjustment of the generator torque is added to a generator torque target value determined through variable speed control for adjusting the rotating speed of the rotor and the effective electric power within a predetermined range.

7. The wind power generation apparatus (1) according to claim 4, wherein a rotational fluctuation reducing generator torque target value and the amount of adjustment of the generator torque are both added to a generator torque target value determined through the variable speed control, the rotational fluctuation reducing generator torque target value being determined to reduce rotational fluctuation of one of the power generator and the rotor (4) based on a fluctuation component of one of the rotating speed of the power generator and the rotating speed of the rotor (4).

8. The wind power generation apparatus (1) according to claim 1, wherein the power generator lowers the generator torque by adjusting the field amount to a weak field as the rotor torque decreases.

9. The wind power generation apparatus (1) according to claim 8, wherein
the power generator has the field amount adjusted with a generator torque command value,
the generator torque command value is obtained through correction performed on a generator torque reference value with a generator torque command correction value,
a rotational fluctuation reducing unit providing the generator torque command correction value is formed with: a correction flag calculating unit configured to determine a time for the correction from a wind direction and an azimuth angle; and a generator torque correction amount calculating unit configured to determine a size of the correction.

10. The wind power generation apparatus (1) according to claim 9, wherein the generator torque correction amount calculating unit determines the size of the correction from one of a wind velocity and effective electric power.

11. The wind power generation apparatus (1) according to claim 9 or 10, wherein the generator torque correction amount calculating unit determines the size of the correction, further using a rotating speed of the power generator.

12. The wind power generation apparatus (1) according to claim 9, wherein the generator torque reference value is determined to adjust a rotating speed of the rotor (4) and the generator torque of the power generator in accordance with a wind velocity.

13. A method of operating a wind power generation apparatus (1) including a power generator to be driven when rotor torque is applied to a blade (2) rotating by receiving wind, the power generator further including a wind direction sensor for measuring a wind direction, the power generator generating electric power with generator torque determined through adjustment of a field amount,
**characterized in that** the power generator lowers the generator torque by adjusting the field amount to a weak field as the rotor torque decreases;
the generator torque at an azimuth angle (Φ) at which the tower shadow effect becomes greater based on the wind direction is controlled to become lower than the generator torque maintained constant so as to maintain constant power generation, and wherein
the amount of adjustment of the generator torque is determined in a feedforward manner.

## Patentansprüche

1. Windkrafterzeugungsvorrichtung (1), die Folgendes umfasst:
ein Rotorblatt (2), das konfiguriert ist, zu rotieren, wenn es Wind aufnimmt;
eine Nabe (3), die konfiguriert ist, das Rotorblatt (2) zu tragen, wobei die Nabe (3) in der Lage ist, Windenergie in Rotationsenergie umzusetzen;
einen Turm (7), der konfiguriert ist, eine Last des Flügelblatts (2) zu tragen;
eine Gondel (5), die konfiguriert ist, einen Rotor (4) auf drehbare Weise in Bezug auf den Turm (7) zu tragen, wobei der Rotor (4) das Flügelblatt (2) trägt und mit dem Flügelblatt (2) und der Nabe (3) gebildet ist;
einen Leistungsgenerator, der in der Lage ist, Rotationsenergie des Rotors (4) in eine elektrische Energie umzusetzen, und
einen Windrichtungssensor, der eine Windrichtung misst, wobei
das Rotordrehmoment von dem Rotor (4) in den Leistungsgenerator eingegeben wird,
dann, wenn sich das Rotordrehmoment um einen vorgegebenen Wert oder mehr ändert, sich das Generatordrehmoment, das durch den Leistungsgenerator erzeugt wird, ändert, wobei die Änderung des Rotordrehmoments mehrmals auftritt, während sich der Rotor (4) um 360 Grad dreht, **dadurch gekennzeichnet, dass**
das Generatordrehmoment bei einem Azimutwinkel (Φ), bei dem der Turmschatteneffekt auf der Grundlage der Windrichtung größer ist, so gesteuert wird, dass er geringer ist als das Generatordrehmoment, das konstant gehalten wird, um eine konstante Leistungserzeugung aufrechtzuerhalten, und
ein Betrag der Anpassung des Generatordrehmoments in der Art einer Vorwärtsregelung bestimmt wird.

2. Windkrafterzeugungsvorrichtung (1) nach Anspruch 1, wobei
ein Azimutwinkel eine Drehposition des Rotors (4) relativ zu der Gondel (5) anzeigt, und
das Generatordrehmoment bei dem Azimutwinkel, bei dem das Rotordrehmoment abnimmt, verringert wird, wenn das Flügelblatt (2), das sich in Windrichtung in Bezug auf den Turm (7) befindet, von einem Turmschatten beeinflusst ist.

3. Windkrafterzeugungsvorrichtung (1) nach Anspruch 2, wobei das Generatordrehmoment angepasst ist, um das Rotordrehmoment und das Generatordrehmoment bei dem Azimutwinkel, bei dem das Rotordrehmoment abnimmt, einander anzugleichen.

4. Windkrafterzeugungsvorrichtung (1) nach Anspruch 2, wobei ein Betrag der Anpassung des Generatordrehmoments in der Art einer Vorwärtsregelung auf der Grundlage einer Windgeschwindigkeit oder einer elektrischen Ausgangswirkleistung des Leistungsgenerators bestimmt wird.

5. Windkrafterzeugungsvorrichtung (1) nach Anspruch 4, wobei der Betrag der Anpassung des Generatordrehmoments durch Rückkoppeln einer Drehgeschwindigkeit des Rotors (4) oder einer Drehgeschwindigkeit des Leistungsgenerators geeignet aktualisiert wird.

6. Windkrafterzeugungsvorrichtung (1) nach Anspruch 4, wobei der Betrag der Anpassung des Generatordrehmoments zu einem Generatordrehmomentsollwert, der durch eine veränderbare Geschwindigkeitssteuerung bestimmt ist, addiert wird, um die Drehgeschwindigkeit des Rotors und die elektrische Wirkleistung in einem vorgegebenen Bereich anzupassen.

7. Windkrafterzeugungsvorrichtung (1) nach Anspruch 4, wobei sowohl ein drehschwankungsverringernder Generatordrehmomentsollwert als auch der Betrag der Anpassung des Generatordrehmoments zu einem Generatordrehmomentsollwert, der durch die veränderbare Geschwindigkeitssteuerung bestimmt ist, addiert werden, wobei der drehschwankungsverringernde Generatordrehmomentsollwert dazu bestimmt ist, Drehschwankungen des Leistungsgenerators und des Rotors (4) auf der Grundlage einer Schwankungskomponente der Drehgeschwindigkeit des Leistungsgenerators oder der Drehgeschwindigkeit des Rotors (4) zu verringern

8. Windkrafterzeugungsvorrichtung (1) nach Anspruch 1, wobei der Leistungsgenerator das Generatordrehmoment durch Anpassen des Feldbetrags auf ein schwaches Feld verringert, wenn das Rotordrehmoment abnimmt.

9. Windkrafterzeugungsvorrichtung (1) nach Anspruch 8, wobei
der Leistungsgenerator den Feldbetrag mit einem Generatordrehmomentanweisungswert anpasst,
der Generatordrehmomentwert durch eine Korrektur erhalten wird, die an einem Generatordrehmomentreferenzwert mit einem Generatordrehmomentanweisungskorrekturwert durchgeführt wird, und
eine Drehschwankungsverringerungseinheit, die den Generatordrehmomentanweisungskorrekturwert bereitstellt, mit Folgendem gebildet ist: einer Korrekturmerker-Berechnungseinheit, die konfiguriert ist, eine Zeit für die Korrektur aus einer Windrichtung und einem Azimutwinkel zu bestimmen; und einer Generatordrehmomentkorrekturbetrags-Berechnungseinheit, die konfiguriert ist, eine Größe der Korrektur zu bestimmen.

10. Windkrafterzeugungsvorrichtung (1) nach Anspruch 9, wobei die Generatordrehmomentkorrekturbetrags-Berechnungseinheit die Größe der Korrektur aus einer Windgeschwindigkeit oder einer elektrischen Wirkleistung bestimmt.

11. Windkrafterzeugungsvorrichtung (1) nach Anspruch 9 oder 10, wobei die Generatordrehmomentkorrekturbetrags-Berechnungseinheit die Größe der Korrektur ferner unter Verwendung einer Drehgeschwindigkeit des Leistungsgenerators bestimmt.

12. Windkrafterzeugungsvorrichtung (1) nach Anspruch 9, wobei der Generatordrehmomentreferenzwert derart bestimmt ist, dass eine Drehgeschwindigkeit des Rotors (4) und das Generatordrehmoment des Leistungsgenerators entsprechend einer Windgeschwindigkeit eingestellt ist.

13. Verfahren zum Betreiben einer Windkrafterzeugungsvorrichtung (1), die einen Leistungsgenerator enthält, der angetrieben werden soll, wenn ein Rotordrehmoment an ein Flügelblatt (2), das sich durch Aufnehmen von Wind dreht, angelegt wird, wobei der Leistungsgenerator ferner einen Windrichtungssensor zum Messen einer Windrichtung enthält und der Leistungsgenerator elektrische Leistung erzeugt, wobei das Generatordrehmoment durch eine Anpassung eines Feldbetrags bestimmt wird,
**dadurch gekennzeichnet, dass**
der Leistungsgenerator das Generatordrehmoment durch Anpassen des Feldbetrags auf ein schwaches Feld verringert, wenn das Rotordrehmoment abnimmt; und
das Generatordrehmoment bei einem Azimutwinkel (Φ), bei dem der Turmschatteneffekt auf der Grundlage der Windrichtung größer wird, so gesteuert wird, das er geringer als das Generatordrehmoment wird, das konstant gehalten wird, um eine konstante Leistungserzeugung aufrechtzuerhalten, wobei
der Betrag der Anpassung des Generatordrehmoments in der Art einer Vorwärtsregelung bestimmt wird.

## Revendications

1. Appareil de génération d'énergie éolienne (1) comprenant :
une pale (2) configurée de manière à entrer en rotation quand elle reçoit du vent ;
un moyeu (3) configuré de manière à supporter la pale (2), le moyeu (3) étant capable de convertir l'énergie du vent en énergie rotationnelle ;
un mât (7) configuré de manière à supporter une charge de la pale (2) ;
une nacelle (5) configurée de manière à supporter un rotor (4) de manière rotative par rapport au mât (7), le rotor (4) supportant la pale (2) et étant formé avec la pale (2) et le moyeu (3) ;
un générateur d'électricité capable de convertir l'énergie rotationnelle du rotor (4) en énergie électrique, et
un capteur de direction du vent qui mesure une direction du vent,
dans lequel le couple du rotor est entré vers le générateur d'électricité à partir du rotor (4),
quand le couple du rotor change à raison d'une valeur prédéterminée ou supérieure, le couple du générateur généré par le générateur d'électricité est modifié, la modification du couple du rotor s'effectuant une pluralité de fois pendant que le rotor (4) tourne à 360 degrés, **caractérisé en ce que**
le couple du générateur à un angle d'azimut (Φ) auquel l'effet d'ombre du mât devient plus important sur la base de la direction du vent est commandé de manière à devenir inférieur au couple du générateur maintenu constant de façon à maintenir constante la génération d'électricité, et
une amplitude d'ajustement du couple du générateur est déterminée de manière prédictive.

2. Appareil de génération d'énergie éolienne (1) selon la revendication 1, dans lequel
un angle d'azimut indique une position rotationnelle du rotor (4) par rapport à la nacelle (5), et
le couple du générateur est réduit à l'angle d'azimut auquel le couple du rotor diminue quand la pale (2) située sous le vent par rapport au mât (7) est affectée par une ombre du mât.

3. Appareil de génération d'énergie éolienne (1) selon la revendication 2, dans lequel le couple du générateur est ajusté pour rendre le couple du rotor et le couple du générateur égaux l'un à l'autre, à l'angle d'azimut auquel le couple du rotor diminue.

4. Appareil de génération d'énergie éolienne (1) selon la revendication 2, dans lequel une amplitude d'ajustement du couple du générateur est déterminée de manière prédictive sur la base d'un paramètre parmi la vitesse du vent et la sortie de puissance électrique effective provenant du générateur d'électricité.

5. Appareil de génération d'énergie éolienne (1) selon la revendication 4, dans lequel l'amplitude d'ajustement du couple du générateur est mise à jour de façon appropriée en appliquant en retour une vitesse de rotation parmi celle du rotor (4) et celle du générateur d'électricité.

6. Appareil de génération d'énergie éolienne (1) selon la revendication 4, dans lequel l'amplitude d'ajustement du couple du générateur est ajoutée à une valeur cible du couple du générateur déterminée au moyen d'une commande de vitesse variable afin d'ajuster la vitesse de rotation du rotor et la puissance électrique effective à l'intérieur d'une plage prédéterminée.

7. Appareil de génération d'énergie éolienne (1) selon la revendication 4, dans lequel une valeur cible du couple du générateur réduisant la fluctuation rotationnelle, et l'amplitude d'ajustement du couple du générateur sont toutes les deux ajoutées à une valeur cible du couple du générateur déterminée au moyen de la commande de vitesse variable, la valeur cible du couple du générateur réduisant la fluctuation rotationnelle étant déterminée de manière à réduire la fluctuation rotationnelle d'un élément parmi le générateur d'électricité et le rotor (4) sur la base d'un composant de fluctuation d'une vitesse de rotation parmi celle du générateur d'électricité et celle du rotor (4).

8. Appareil de génération d'énergie éolienne (1) selon la revendication 1, dans lequel le générateur d'électricité réduit le couple du générateur en ajustant l'amplitude de champ à un champ faible lorsque le couple du rotor diminue.

9. Appareil de génération d'énergie éolienne (1) selon la revendication 8, dans lequel
le générateur d'électricité a l'amplitude de champ ajustée avec une valeur d'ordre du couple du générateur,
la valeur d'ordre du couple du générateur est obtenue au moyen d'une correction exécutée sur une valeur de référence du couple du générateur avec une valeur de correction d'ordre du couple du générateur,
une unité réduisant la fluctuation rotationnelle fournissant la valeur de correction d'ordre du couple du générateur est réalisée avec : une unité calculant un drapeau de correction configuré de manière à déterminer un temps de correction à partir d'une direction du vent et d'un angle d'azimut ; et une unité calculant une amplitude de correction du couple du générateur configurée de manière à déterminer une taille de la correction.

10. Appareil de génération d'énergie éolienne (1) selon la revendication 9, dans lequel l'unité de calcul d'amplitude de correction du couple du générateur détermine la taille de la correction à partir d'un paramètre parmi la vitesse du vent et la puissance électrique effective.

11. Appareil de génération d'énergie éolienne (1) selon la revendication 9 ou 10, dans lequel l'unité de calcul d'amplitude de correction du couple du générateur détermine la taille de la correction, en utilisant en outre une vitesse de rotation du générateur d'électricité.

12. Appareil de génération d'énergie éolienne (1) selon la revendication 9, dans lequel la valeur de référence du couple du générateur est déterminée de manière à ajuster une vitesse de rotation du rotor (4) et le couple du générateur d'électricité en fonction d'une vitesse du vent.

13. Procédé de fonctionnement d'un appareil de génération d'énergie éolienne (1), incluant un générateur d'électricité devant être entraîné quand un couple de rotor est appliqué à une pale (2) mise en rotation par le vent reçu, le générateur d'électricité incluant en outre un capteur de direction du vent destiné à mesurer une direction du vent, le générateur d'électricité générant une puissance électrique avec le couple du générateur déterminé par l'ajustement d'une amplitude de champ,
**caractérisé en ce que** le générateur d'électricité baisse le couple du générateur en ajustant l'amplitude de champ à un champ faible quand le couple du rotor diminue ; le couple du générateur à un angle d'azimut (Φ) auquel l'effet d'ombre du mât devient plus important sur la base de la direction du vent est commandé pour devenir inférieur au couple du générateur maintenu constant de façon à maintenir constante la génération d'électricité, et dans lequel l'amplitude d'ajustement du couple du générateur est déterminée de manière prédictive.
